Europäisches Patentamt

(19) European Patent Office

Office européen des brevets

(11) Publication number: **0 243 960 B1**

(12) **EUROPEAN PATENT SPECIFICATION**

(45) Date of publication of patent specification :
13.11.91 Bulletin 91/46

(51) Int. Cl.⁵ : **H02P 5/40**

(21) Application number : 87106267.5

(22) Date of filing : 29.04.87

(54) Vector control apparatus for induction motor.

(30) Priority : 02.05.86 JP 102666/86
02.05.86 JP 102667/86
02.05.86 JP 102668/86

(43) Date of publication of application :
04.11.87 Bulletin 87/45

(45) Publication of the grant of the patent :
13.11.91 Bulletin 91/46

(84) Designated Contracting States :
CH DE FR LI

(56) References cited :
EP-A- 0 075 023
EP-A- 0 078 698
EP-A- 0 083 945
US-A- 4 418 308
US-A- 4 558 269

(56) References cited :
IEEE TRANSACTIONS ON INDUSTRIAL ELEC-
TRONICS AND CONTROL INSTRUMEN-
TATION, vol. IECI-28, no. 1, February 1981,
pages 17-21, IEEE, New York, US; P.C. SEN et
al.: "Microprocessor control of an induction
motor with flux regulation"
PATENT ABSTRACTS OF JAPAN, vol. 8, no. 59
(E-232)[1496], 17th March 1984; & JP-A-58 207
894 (MITSUBISHI DENKI K.K.) 03-12-1983

(73) Proprietor : NEC CORPORATION
7-1, Shiba 5-chome Minato-ku
Tokyo 108-01 (JP)

(72) Inventor : Okamoto, Kiyokazu c/o NEC
Corporation
33-1, Shiba 5-chome
Minato-ku Tokyo (JP)
Inventor : Amagai, Hideyuki Nippon Electric
Industry Co. Ltd.
19-18, Tsutsumi-dori 1-chome
Sumida-ku Tokyo (JP)

(74) Representative : Vossius & Partner
Siebertstrasse 4 P.O. Box 86 07 67
W-8000 München 86 (DE)

## Description

The present invention relates to a vector control apparatus for an induction motor and, more particularly, to a vector control apparatus for an induction motor wherein rotational smoothness of the motor at a low rotation speed with a small torque can be greatly improved and a loss of the motor with a large torque can be greatly reduced.

Conventional induction motors have been used as constant speed motors using a power source of a predetermined frequency in a variety of applications due to rigidness and low cost.

Along with the recent development of electronic devices, microcomputers, and software, a power source having a wide variable frequency range can be obtained to drive an induction motor. The field of applications of the induction motors is changing from constant speed motors to servo motors. The variable frequency power source is operated according to vector control.

Basic parameters in vector control are a torque current $i_{1q}$, an exciting current $i_0$ for generating a secondary flux $\Phi_2$, and a slip speed $\omega_s$ and are defined as follows:

$$i_{1q} = (L_{22}/M)(T/\Phi_2) \quad (1)$$
$$i_0 = \{\Phi_2 + (L_{22}/R_2)\cdot(d\Phi_2/dt)\}/M \quad (2)$$
$$\omega_s = TR_2/\Phi_2{}^2 = (R_2/L_{22})\cdot(i_{1q}/i_0) \quad (3)$$

for the steady state, i.e., $d\Phi_2/dt = 0$ where $L_{22}$ is the inductance of the secondary winding, M is the mutual inductance between the primary and secondary windings, T is the torque, $\Phi_2$ is the flux generated by the primary winding and crossing with the secondary winding, and $R_2$ is the resistance of the secondary winding. Relational equations (1), (2) and (3) are referred to as vector relational equations.

The secondary flux $\Phi_2$ is a predetermined value in vector control. The torque T is a command value supplied to the vector controller for $d\Phi_2/dt = 0$ as follows:

$$T = (M^2/R_2)\omega_s i_0{}^2 = (M^2/L_{22})i_0 i_{1q} \quad (4)$$

That is, a so-called inverter is controlled by the slip speed $\omega_s$, the exciting current $i_0$, and the torque current $i_{1q}$ to supply power to the induction motor so as to allow the motor to operate at desired ratings.

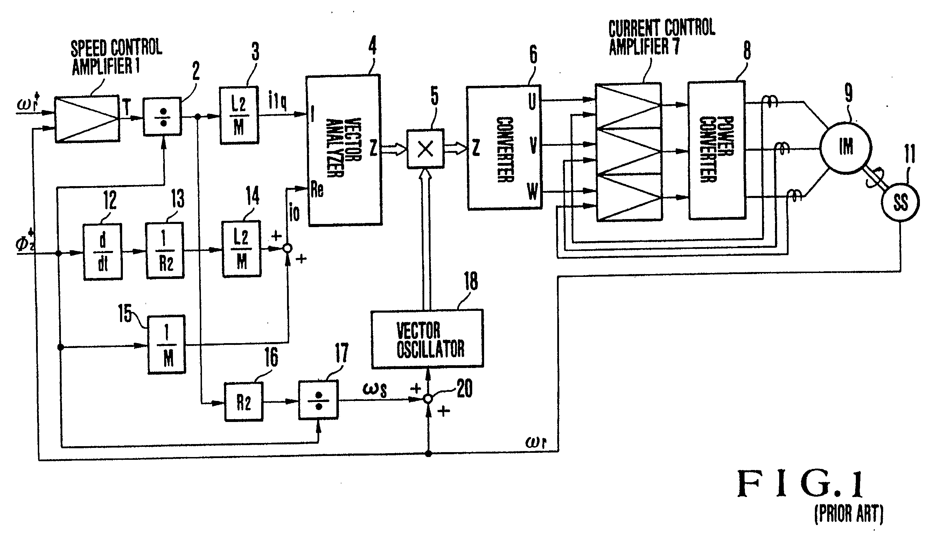

Fig. 1 is a block diagram of a conventional vector control system shown in "New Drive Electronics", Naohiko Kamiyama, P, 205. In other words, Fig. 1 shows a basic arrangement of conventional "slip frequency type vector control".

Referring to Fig. 1, reference numeral 1 denotes a speed control amplifier for generating a torque T; 2, a divider; 3, a constant setter for outputting the torque current $i_{1q}$; 4, a vector analyzer; 5, a multiplier; 6, a converter; 7, a current amplifier; 8, a power converter; 9, an induction motor; 11, a speed detector; 12, a differentiator; 13, 14, 15, and 16, constant setters for generating the exciting current $i_0$; 17, a divider for generating the slip speed $\omega_s$; 18, a vector oscillator; and 20, an adder. With the above arrangement, the torque can be controlled in accordance with an instantaneous current. Please refer to PP. 205 - 206 in the above reference for the operation of the circuit shown in Fig. 1.

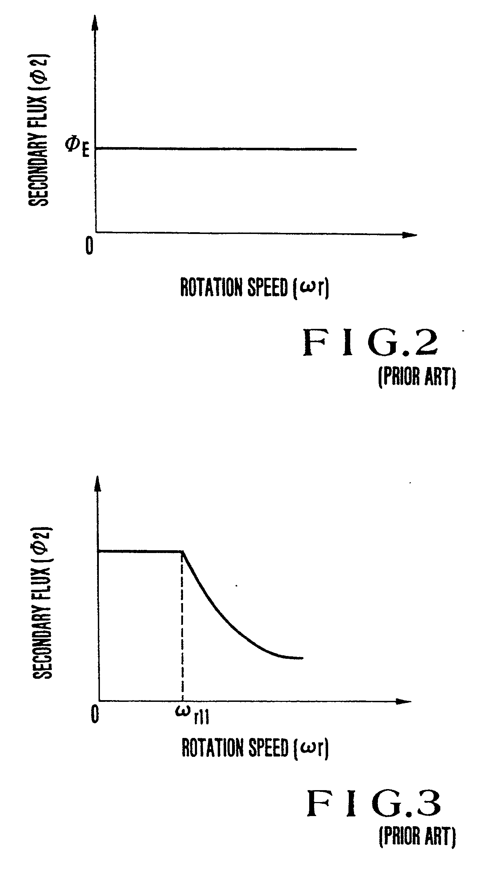

In the case of the slip frequency type vector control circuit shown in Fig. 1, an expected value $\Phi_E$ of the secondary flux $\Phi_2$ is generally constant within the entire rotation speed range and the entire torque range (this is called as constant torque characteristics, so that an output from the induction motor is increased in proportion to the motor rotation speed), as shown in Fig. 2.

If a constant output of the induction motor in a high-speed range is required, the secondary flux $\Phi_2$ is kept constant at a rotation speed below a predetermined rotation speed $\omega_{r11}$, as shown in Fig. 3. However, at a rotation speed exceeding the predetermined rotation speed $\omega_{r11}$, the secondary flux $\Phi_2$ is in inverse proportion to the rotation speed $\omega_r$ (i.e., constant output characteristics). In this case, the secondary flux $\Phi_2$ is a function of the rotation speed $\omega_r$.

However, if the induction motor is used as a servo motor, the following problems are presented. The servo motor must satisfy the following requirements: (1) smooth rotation, i.e., a small variation in rotation speed is required in mainly a low-speed range in order to achieve high-precision control, for example, in table feed finish machining in a machine tool; and (2) a heat loss must be minimized and a torque must be maximized in a high-output operation in, e.g., table feed coarse machining in the machine tool.

In EP-A1-75023 a method of controlling an AC motor and device thereof is described. In this method, the exciting current $I_0$ of an AC motor is kept constant, and the primary current $I_1$ is changed in response to the velocity difference $\Delta n$ so as to control the AC motor. A memory device (18) previously stores the torque-to-slip frequency $\omega_s$ as characteristics, based on the secondary leakage reactance, and characteristics of the slip frequency $\omega_s$-to-primary current vectors $I_1$, $\phi_1$. According to the torque command T obtained from the velocity difference $\Delta n$, with the slip frequency $\omega_s$ and the primary current vectors $I_1$, $\phi1$, are read out and then 3-phase current, IU, IV, IW are delivered. This method and device suppresses torque irregularities and improves response.

In conventional slip frequency type vector control, the requirements of the servo motor cannot be sufficiently satisfied. More specifically, the loss of the output in a high torque operation cannot be reduced and smooth rotation at a low speed with a small load cannot be achieved.

It is an object of the present invention to provide a vector control apparatus for an induction motor wherein a loss can be reduced in an operation with a high torque, and smooth rotation at a small load can be achieved.

A vector control apparatus according to the present invention comprises: means for outputting a torque command; means for outputting a secondary flux command; means for calculating a current command value of each phase of an induction motor on the basis of the torque command and the secondary flux command; and means for supplying a current represented by the current command value to the induction motor; the secondary flux command output means comprising memory means for storing a function representing a predetermined relationship between a rotation speed, a torque, and a secondary flux of the induction motor, and for outputting the secondary flux corresponding to rotation speed data and torque data, and means for supplying at least the data corresponding to one of the torque command T and the actual speed $\omega_r$ to the memory means, and

said predetermined relation between $\omega_r$, T, and $\phi_2$ being determined such that when T is large, the secondary magnetic flux $\phi_2$ is increased within a range where the ratio of the motor loss L to T (T/L) can reach a maximum value, in such a way as to minimize a slip speed $\omega_s$, and when T is small and the actual speed is less than a predetermined value, the secondary magnetic flux $\phi_2$ is reduced in such a way as to reduce ripple of said actual speed $\omega_s$, and to increase said slip speed $\omega_s$, within an allowable range of the loss L.

The invention will be described in more detail, by way of example, and with reference to the accompanying drawing in which:

Fig. 1 is a block diagram of a conventional vector control apparatus for an induction motor;

Figs. 2 and 3 are graphs for explaining the operation of the vector control apparatus shown in Fig, 1;

Fig. 4 is a graph for explaining the principle of operation of the present invention;

Fig. 5 is a block diagram of an induction motor control apparatus according to an embodiment of the present invention;

Fig. 6 is a graph showing the contents of a memory shown in Fig. 5;

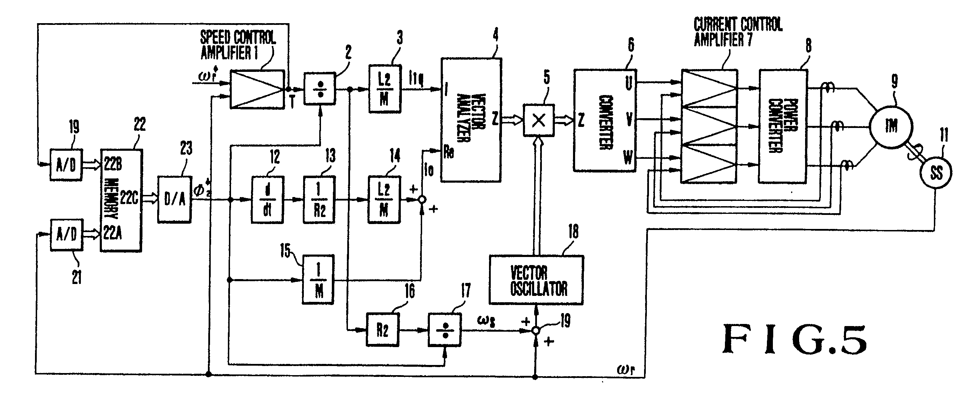

Figs, 7, 8, and 9 are graphs showing different contents of the memory shown in Fig. 5;

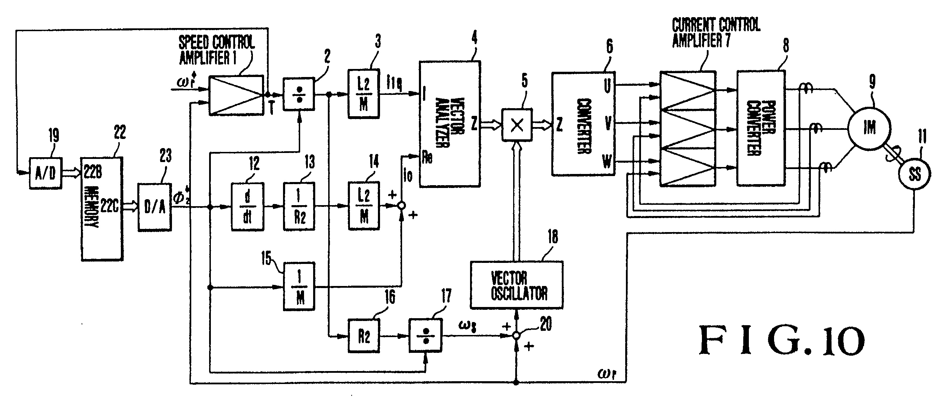

Fig. 10 is a block diagram of a vector control apparatus according to another embodiment of the present invention; and

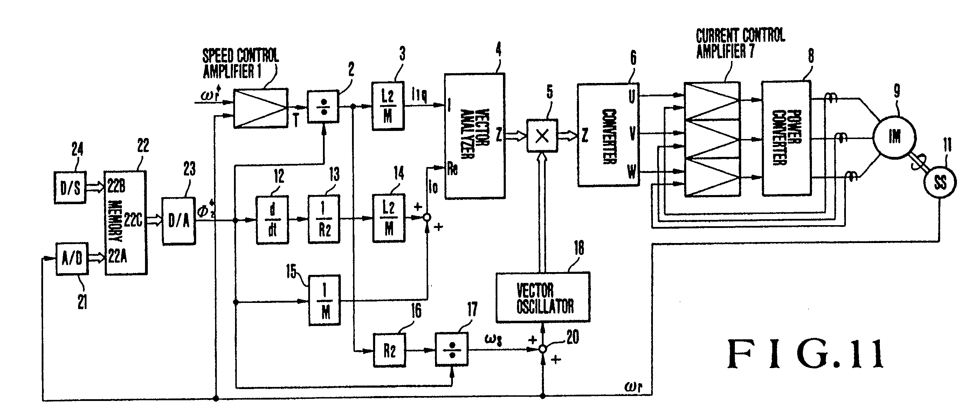

Fig. 11 is a block diagram of a vector control apparatus according to still another embodiment of the present invention.

The principle of the present invention will be described so as to best understand the present invention prior to a description of a preferred embodiment.

In general, when a load such as a machine tool is driven, a large torque at a load-side portion on which a torque (force) acts causes a stress when a large torque acts on the load. In this case, a high output must be generated. A loss caused by heat dissipation of the induction motor must be minimized even if smooth rotation thereof is sacrificed. Losses of the induction motor are classified into a copper loss, a core loss, and a mechanical loss. Of these losses, the copper loss is the major loss. The copper loss is increased in proportion to the square the primary and secondary currents. The core loss is regarded to increase in proportion to the 1.6 to second power of the flux density (which is proportional to the exciting current if a relatively small hysteresis loss is neglected) and to the square (second power) of a primary frequency $\omega_1$ of power applied to the induction motor. For the sake of simplicity, the core loss is assumed to increase in proportion to the square of the flux density or the exciting current.

The mechanical loss is generated by other causes and will not be described herein.

In order to reduce the loss, reduction of the losses with respect to the exciting current $i_0$ and the torque current $i_{1q}$ is very important.

The main components of the loss L can be represented as follows:

$$L = R_1 i_1{}^2 + R_2 i_2{}^2 + a\omega_1{}^2 i_0{}^2 \qquad \ldots (5)$$

$$\text{for } i_1{}^2 = i_0{}^2 + i_{1q}{}^2$$

$$i_2{}^2 = (M i_{1q}/L_{22})^2$$

$$a = \text{constant}$$

In equation (5), the first and second terms correspond to the copper loss, and the third term corresponds to the core loss. L

$$\text{If } R_1' = R_1 + a\omega_1^2, \text{ then}$$

$$L = R_1' i_0^2 + (R_1 + R_2 M^2/L_{22}^2) i_{1q}^2 \qquad \ldots (6)$$

Equations (1) and (3) yield

$$i_{1q}^2 = (L_{22}^2/M^2)\cdot(T^2/\Phi_2^2) = (T/M^2)\cdot(L_{22}^2/R_2)\cdot\omega_s$$

A substitution of this equation into equation (6) yields the following equation relating the loss L and the torque T:

$$L = (T/M^2) [ (R_1' R_2/\omega_s + (R_1/R_2)$$

$$x (L_{22}^2 + R_2 M^2/R_1)\omega_s] \qquad \ldots (7)$$

Equation (7) can be rewritten as follows:

$$L = (T/M^2) [ \{\sqrt{R_1' R_2/\omega_s} - \sqrt{(R_1/R_2)}$$

$$x \sqrt{(L_{22}^2 + R_2 M^2/R_1)\omega_s} \}^2$$

$$+ 2\sqrt{R_1' R_1}\sqrt{L_{22}^2 + R_2 M^2/R_1}] \qquad \ldots (8)$$

$$\geq 2(T/M^2) \sqrt{R_1' R_1} \sqrt{L_{22}^2 + R_2 M^2/R_1}$$

$$\text{(L is equal to the right-hand side}$$

$$\text{if } \omega_s = 10\sqrt{R_1'/R_1}\cdot R_2/\sqrt{L_{22}^2 + R_2 M^2/R_1})$$

$$\ldots (9)$$

That is,

$$T/L = M^2/ \{(R_1' R_2/\omega_s) + (R_1/R_2) (L_{22}^2$$

$$+ R_2 M^2/R_1) \omega_s \}$$

$$\leq M^2/2\sqrt{R_1' R_1}\sqrt{L_{22}^2 + R_2 M^2/R_1} \qquad \ldots (10)$$

(T/L is equal to the right-hand side if $\omega_s = (\sqrt{R_1'/R_1}\cdot R_2)/\sqrt{L_{22}^2 + R_2 M^2/R_1}$, that is, T/L = maximum)

A relationship between a speed variation $\Delta\omega_r$ and a harmonic component $\Delta T$ of the torque T is calculated. The speed variation $\Delta\omega_r$ is calculated by the equation of motion of the rotor of the induction motor as follows:

Equation of Motion:

$$Jd(\omega_r + \Delta\omega_r)/dt + Dr(\omega_r + \Delta\omega_r) + T_L = Ta + \Delta T \quad (11)$$

where J is the inertia, Dr is the speed viscosity coefficient, $\omega_r$ is the rotation speed, $T_L$ is the torque loss, and Ta is the output torque.

In the steady state,

$$d\omega_r/dt = 0 \text{ and } Dr\omega_r + T_L = Ta$$

therefore

$$Jd\Delta\omega_r/dt + Dr\Delta\omega_r = \Delta T \quad (12)$$

If a harmonic component of the first order frequency $\omega_1$ is given as $mp\omega_1$, where p is the number of pole pairs, then

$$\Delta\omega_r = \Delta T/\sqrt{(Jmp\omega_1)^2 + Dr^2} \leqq \Delta T/Jmp\omega_1 \quad (13)$$

Since $\omega_1 = \omega_r + \omega_s$, then

$$\Delta\omega_r = (\Delta T/Jmp)\{1/(\omega_r + \omega_s)\} \quad (14)$$

In order to reduce $\Delta\omega_r$ at a given torque harmonic component $\Delta T$, $\omega_s$ is increased. If $\omega_s$ is multiplied with $k_2$, equation (14) can be rewritten as follows:

$$\Delta\omega_r = (\Delta T/Jmp) \times \{1/(\omega_r + k_2 \cdot \omega_s)\} \quad (15)$$

The term $\Delta T/Jmp$ in equation (15) is a contant, and the term $1/(\omega_r + k_2 \cdot \omega_s)$ is a variable. In the variable, i.e., $1/(\omega_r + k_2 \cdot \omega_s)$ in equation (15), if the rotation speed $\omega_r$ is low, the speed variation $\Delta\omega_r$ can be reduced by increasing k. That is, if the value of the rotation speed $\omega_r$ is small, the speed variation $\Delta\omega_r$ can be reduced by increasing the slip speed $\omega_s$.

As is apparent from the above description, in order to increase the T/L or decrease the $\Delta\omega_r$, the most important factor is the slip speed $\omega_s$. A relationship between the torque T, the loss L, and the slip speed $\omega_s$ will be described with reference to Fig.. 4 showing a coordinate system plotting $i_0$ and $i_{1q}$ along the abscissa and ordinate. The loss L is given by equation (6) described above:

$$L = R_1'i_0^2 + (R_1 + R_2M^2/L_{22}^2)i_{1q}^2 \quad (6)$$

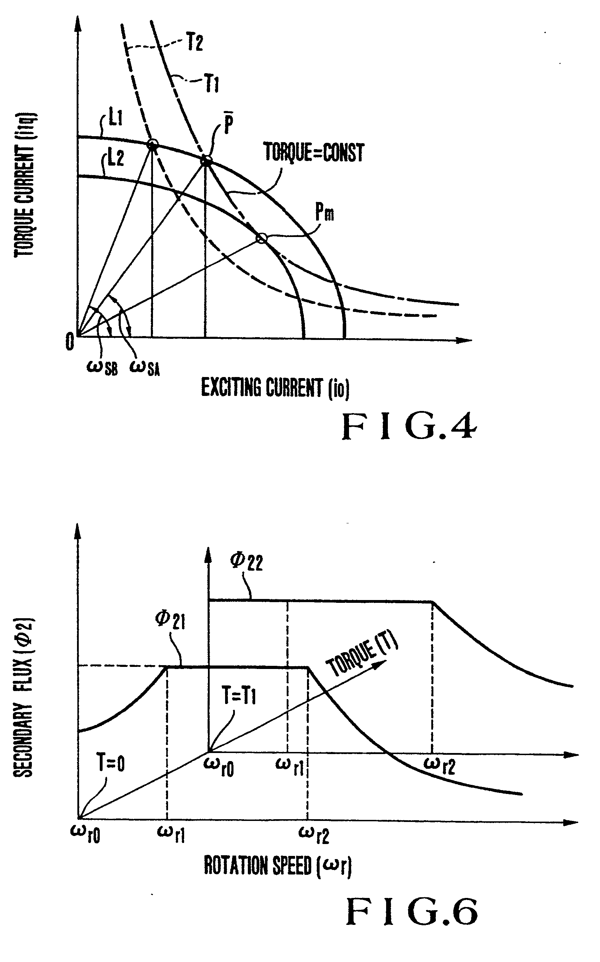

Equation (6) indicates that $i_0$ and $i_{1q}$ for a constant loss L form a part of a ellipse as shown with, for example, symbols $L_1$ and $L_2$ in Fig. 4.

At the same time, the torque T is defined by equation (4):

$$T = (M^2/L_{22})i_0i_{1q} \quad (4)$$

The "torque T = a constant curve" in the $i_0$-$i_{1q}$ coordinate system is a hyperbola as shown with, for example, $T_1$ and $T_2$ in Fig. 4.

An allowable heat loss of the induction motor is predetermined. When a specific torque T is given, the upper limit of the slip speed $\omega_s$ as a function of the allowable loss L is determined. For example, referring to Fig. 4, upper limits of slip speeds $\omega_s$ for the torques $T_1$ and $T_2$ at the allowable loss $L_1$ are calculated. For example, upper limit values $\omega_{s1}$ of the slip speeds $\omega_s$ for the torques $T_1$ and $T_2$ at the allowable loss $L_1$ are $\omega_{sA}$ and $\omega_{sB}$, respectively.

If a ratio ($\omega_{sE}/\omega_{s1}$) of an expected value $\omega_{sE}$ to a slip speed upper limit value $\omega_{s1}$ is given as $k_0^2$, $k_0^2$ is the maximum value. That is, if $k_0^2$ is increased, the loss exceeds the allowable heat loss. In other words, when the slip speed $\omega_s$ is increased, the loss is increased. The advantage obtained by increasing the slip speed $\omega_s$ is given as follows.

Since the slip speed $\omega_s$ is given as a function of the torque T as in equation (3), the slip speed $\omega_s$ is larger than the rotation speed $\omega_r$ at a low speed with a large torque T. If the $k_0$ is larger then 1, $k_0^2\omega_s$ is larger than $\omega_r$. For this reason, when $\omega_r$ shown in equation (15) is small, the speed variation $\Delta\omega_r$ falls within a sufficiently narrow range.

The induction motor as the servo motor has a structure for inhibiting electromagnetic saturation even if a large torque for acceleration or deceleration is required. Therefore, the induction motor is regarded to have a structure wherein the motor is not electromagnetically saturated even if an exciting or torque current is partially increased or decreased.

By properly selecting the slip speed $\omega_s = (R_2/L_{22})(i_{1q}/i_0)$, i.e., a ratio of the exciting current $i_0$ and the torque current $i_{1q}$, the loss L can be minimized. In addition, the speed variation $\Delta\omega_r$ can be reduced.

The present invention is based on the principle described above.

Fig. 5 is a block diagram of a vector control apparatus for an induction motor according to an embodiment of the present invention. The same, reference numerals as in Fig. 1 denote the same parts in Fig. 5, and a detailed description thereof will be omitted.

Referring to Fig. 5, a signal representing the rotation speed $\omega_r$ from a speed sensor 11 is input to a speed control amplifier 1. This signal is A/D-converted by an A/D converter 21. The output terminal of the A/D converter 21 is connected to an input terminal 22A of a memory 22. The output terminal of the speed control amplifier 1 is connected to an intput terminal 22B of the memory 22 through an A/D converter 19. An output terminal 22C of the memory 22 is connected to a divider 2, a differentiator 12, a constant setter 15, and a divider 17 through

EP 0 243 960 B1

a D/A converter 23.

The parts comprising the converters 19, 21, and 23, and the memory 22 are external elements added to the conventional vector control system (Fig. 1) and are referred to as a "memory system". As illustrated in the embodiment of Fig. 10 and 11, there can be a case where either of the converters 19 and 20 is not used, but the memory means is always used. The data which are used or registered in this memory means show the relationship between inputs (torque T and speed $\omega_r$) and outputs (secondary magnetic flux $\phi2$) is called the "magnetic flux $\phi2$ relation" as referred to in the following.

The operation of the vector control apparatus having the above arrangement in Fig. 5 will be described below.

The signal representing the rotation speed $\omega_r$ is input to the memory 22 through the A/D converter 21. A signal representing the torque T from the speed control amplifier 1 is input to the memory 22 through the A/D converter 19. Three-dimensional plane data representing the relationship between the rotation speed $\omega_r$, the torque T, and the secondary flux $\Phi_2$ is stored in the memory 22.

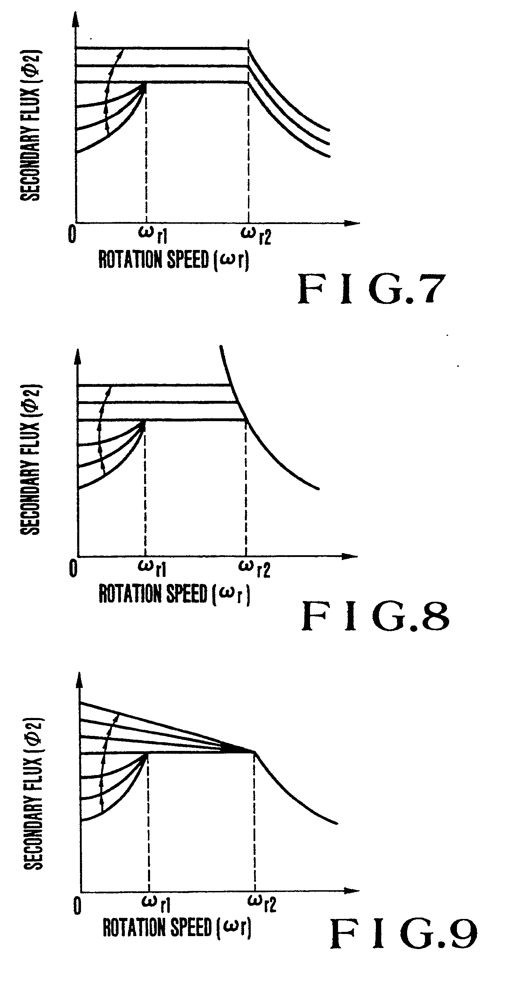

Fig, 6 shows an example of data stored in the memory 22. Referring to Fig. 6, the $\omega_r$-$\Phi_2$ plane of the rotation speed $\omega_r$ and the secondary flux $\Phi_2$ indicates only a case wherein the torques are zero and $T_1$. More specifically, if $T = 0$, then the secondary flux $\Phi_2$ is gradually increased when the rotation speed $\omega_r$ is less than $\omega_{r1}$, as indicated by a curve $\Phi_{21}$. In the range between the rotation speeds $\omega_{r1}$ and $\omega_{r2}$, the secondary flux $\Phi_2$ has a predetermined maximum valve. If the rotation speed exceeds $\omega_{r2}$, the secondary flux $\Phi_2$ is gradually decreased. However, if the torque T is increased and reaches $T_1$, the secondary flux $\Phi_2$ has a maximum value in the range between $\omega_{r0}$ and $\omega_{r2}$, as indicated by a curve $\Phi_{22}$. The torque T and the rotation speed $\omega_r$ are input as address signals to the memory 22 from the input terminals 22B and 22A, respectively. The secondary fluxes $\Phi_2$ (e.g., $\Phi_{21}$ and $\Phi_{22}$) are solely output from the memory 22.

The data value of the secondary flux $\Phi_2$ is determined to cause the loss L to fall within the allowable range. The secondary flux $\Phi_2$ is used together with the torque T and the rotation speed $\omega_r$ to calculate slip speed $\omega_s$, the exciting current $i_0$, and the torque current $i_{1q}$ according to equations (1), (2), and (3) which maintain the relations in vector control.

Data stored in the memory 22 is not limited to the one shown in Fig. 6. Data shown in Figs. 7, 8, and 9 may be stored in place of the data shown in Fig. 6. Arrows in fig. 7, 8, and 9 show directions of increases in torque T.

The data shown in Fig, 7 is used in a case wherein both the induction motor and the power source have sufficient margins and a large torque is required even at a high speed. The data shown in Fig. 8 is used in a case wherein the induction motor has a sufficient margin but a large torque is required at intermediate and low speeds. The data shown in Fig. 9 is used in a case wherein neither the induction motor nor the power source have margins and a large torque is required at a low speed.

Since the vector control parameters are represented by equations (1), (2), and (3), equation (2) yields relation $\Phi_2 = \Phi_2(i_0)$. A substitution of this relation into equations (1) and (3) yields equations (1) and (3) as a function of $i_0$. Therefore, it is apparent that the secondary flux $\Phi_2$ need not be used.

For example, instead of determining the secondary flux $\Phi_2$ by the torque T and the rotation speed $\omega_r$, the exciting current $i_0$ having one-to-one correspondence with the secondary flux $\Phi_2$ is determined by the torque T and the rotation speed $\omega_r$. By using equations obtained by eliminating the secondary flux $\Phi_2$ from equations (1) and (3), the torque current $i_{1q}$ and the slip speed $\omega_s$ are calculated to obtain the same result as described above. Thus, a technique without using the secondary flux $\Phi_2$ can be obtained.

Fig. 10 is a block diagram showing another embodiment of the present invention. The same reference numerals as in Fig. 5 denote the same parts in Fig. 10, and a detailed description thereof will be omitted.

Referring to Fig. 10, data representing rotation speed $\omega_r$ is input to a speed control amplifier 1. The output terminal of the speed control amplifier 1 is connected to an input terminal 22B of a memory 22 through an A/D converter 19. An output terminal 22C of the memory 22 is connected to a divider 2, a differentiator 12, a constant setter 15, and a divider 17 through a D/A converter 23.

In operation, the data of rotation speed $\omega_r$ is input to the speed control amplifier 1. Data of the torque T as an output from the speed control amplifier 1 is input to the memory 22 through the A/D converter 19.

The data shown in Fig. 6 is prestored in the memory 22. Even if the torque T is large, the second flux $\Phi_2$ is set to be large ($\Phi_{22}$) at a low speed. The secondary flux $\Phi_2$2 is changed by only the signal of the torque T. The shape of the curve ($\Phi_{22}$) is not changed. In other words, the curve in a region below $\omega_{r1}$ cannot be changed as in $\Phi_{21}$.

In this case, the secondary flux $\Phi_2$ is determined so that the loss L falls within the tolerance. Using the secondary flux $\Phi_2$ as a parameter, the torque T and the rotation speed $\omega_r$ are used to obtain a slip speed $\omega_s$, an exciting current $i_0$, and a torque current $i_{1q}$, all of which maintain the relations of vector control.

Fig. 11 shows still another embodiment of the present invention. The same reference numerals as in Fig.

6

5 denote the same parts in Fig. 11, and a detailed description thereof will be omitted.

Referring to Fig. 11, data of rotation speed $\omega_r$ is inputted to an input terminal 22A of a memory 22 through an A/D converter 21. An output terminal 22C of the memory 22 is connected to a divider 2, a differentiator 12, a constant setter 15, and a divider 17 through a D/A converter 23. A DIP (Dual Inline Package) switch 24 is connected to an input terminal 22B of the memory 22. Data of a desired torque T can be externally entered by properly setting the DIP switch 24.

The memory 22 prestores secondary fluxes $\Phi_2$ corresponding to values of the rotation speed $\omega_r$ and the values of the torque T. For example, the data shown in Fig. 6 where the value of the torque T is predetermined is stored in the memory 22. By supplying the torque T by setting the DIP switch 24 and the rotation speed $\omega_r$ as address signals, the corresponding secondary flux $\Phi_2$ can be solely output from the memory 22. The data to be stored in the memory 22 may be ones shown in Figs. 7, 8, and 9.

In the above three embodiments, the relation stored in the memory 22 is determined so as to satisfy the following two points:

(1) When the absolute value $|\omega_r|$ of the rotation speed $\omega_r$ is small and the torque T is small, the speed variation $\Delta\omega_r$ is reduced to obtain smooth rotation.

For this purpose, the loss L is increased within the tolerance, and the slip speed $\omega_s$ is increased. The slip speed $\omega_s$ is determined such that the torque T and the rotation speed $\omega_r$ are designated to obtain the corresponding secondary flux $\Phi_2$ and that the torque T and the secondary flux $\Phi_2$ are used to calculate the slip speed $\omega_s$, the exciting current $i_0$, and the torque current $i_{1q}$ so as to maintain the vector control relations (i.e., to establish equations (1), (2), and (3)).

(2) When the torque T is increased, the loss L is reduced.

In this case, the speed variation $\Delta\omega_r$ is sacrificed to reduce the slip speed $\omega_s$. Therefore, the slip speed $\omega_s$ is determined to minimize the loss L.

Since $\omega_s = TR_2/\Phi_2^2$, an increase in torque T causes a proportional increase in slip speed $\omega_s$ in the conventional constant torque and output characteristics. However, according to the present invention, the secondary flux $\Phi_2$ is determined by the torque T and the rotation speed $\omega_r$. As compared with the conventional case wherein the slip speed $\omega_s$ is increased in proportion to the torque T, the slip speed $\omega_s$ can be greatly reduced. Therefore, the loss L can be minimized at a constant torque T.

As shown in Fig. 4, the conventional loss characteristic curve is an elliptical curve as indicated by symbol $L_1$. In this case, the corresponding torque T1 is represented by the alternate long and short dashed line. The operating point of the induction motor is represented by symbol $\bar{P}$. However, according to the present invention, the operating point P can be shifted to Pm by controlling the slip speed $\omega_s$ thereby reducing the loss as indicated by symbol $L_2$.

(3) A means for realizing the present invention can be implemented by adding relatively inexpensive memory elements and the like.

## Claims

1. A vector control apparatus comprising:

   means (1) for outputting a torque command T;

   means for outputting a secondary flux command $\phi_2$;

   means for calculating a current command value of each phase of an inductin motor on the basis of the torque command T and the secondary flux command $\phi_2$; and

   means for supplying a current represented by the current command value to said induction motor (9); characterized in that

   said secondary flux command output means comprising memory meand (22) for storing a function representing a predetermined relationship between a rotation speed $\omega_r$, a torque T, and a secondary flux $\phi_2$ of said induction motor (9), and for outputting the secondary flux $\phi_2$ corresponding to rotation speed data and torque data, and means (19;21) for supplying at least the data corresponding to one of the torque command T and the actual $\omega_r$ to said memory means (22); and

   said predetermined relation between $\omega_r$, T, and $\phi_2$ being determined such that when T is large the secondary magnetic flux $\phi_2$ is increased, within a range where the ratio of the motor loss L to T (T/L) can reach a maximum value, in such a way as to minimize a slip speed $\omega_s$, and when T is small and the actual speed is less than a predetermined value, the secondary magnetic flux $\phi_2$ is reduced in such a way as to reduce ripple of said actual speed $\omega_r$, and to increase said slip speed $\omega_s$, within an allowable range of the loss L.

2. An apparatus according to claim 1, wherein said means for supplying at least said data corresponding to one of the torque command T and the actual speed $\omega_r$ to said memory means (22) comprises:

means (11) for detecting the rotation speed of said induction motor (9);

first means (21) for supplying the digitized rotation speed data to said memory means (22); and

second means (19) for supplying the digitized torque data to said memory means (22).

3. An apparatus according to claim 1, wherein said means for supplying said torque data to said memory means (22) comprises means (19) for supplying the digitized torque data to said memory means (22).

4. An apparatus according to claim 1, wherein said means for supplying said at least data corresponding to one of the torque command T and the actual speed $\omega_r$ to said memory means (22) comprises:

means (11) for detecting the rotation speed of said induction motor (9);

means (21) for supplying the digitized rotation speed data to said memory means (22); and

DIP switch means (24) for supplying the torque command to said memory means (22).

5. An apparatus according any of to claims 1 to 4 wherein the function is set such that a value to the secondary flux $\Phi_2$ or an exciting current $i_0$ of said induction motor (9) is determined by the command torque T and the rotation speed $\omega_r$ and that the excitting current $i_0$, the torque current $i_{1q}$, and the slip speed $\omega_s$ of said inductiong motor (9) are determined so as to maintain relations of vector control on the basis of the secondary flux $\Phi_2$ and the exciting current $i_0$.

6. An apparatus according to claim 5, wherein the function is set such that when the command torque T exceeds a predetermined value, the slip speed $\omega_s$ is changed depending on the commanded torque T; the slip speed $\omega_s$ is determined by values of a mutual inductance M, a secondary inductance $L_{22}$, a primary resistance $R_1$, and a secondary resistance $R_2$, all of which are circuit constants of said induction motor (9); and the slip speed $\omega_s$ causes the secondary flux $\Phi_2$ or the exciting current $i_0$ to increase to a predetermined value so as to minimize a loss (a sum of primary and secondary losses) of said induction motor (9) with respect to the commanded torque T, thereby greatly reducing the loss at a constant torque.

7. An apparatus according to any of claims 1 to 4, wherein the function is set such that: when the command torque T is less than a predetermined value, if an absolute value $|\omega_r|$ of the rotation speed of said induction motor (9) is less than a predetermined value, a slip speed $\omega_s$ is changed depending on a value of the rotation speed $\omega_r$; if the absolute value $|\omega_r|$ of the rotation speed is decreased, the secondary flux $\Phi_2$ or the exciting current $i_0$ is decreased from a normal value to a predetermined value; and if the absolute value $|\omega_r|$ of the rotation speed is increased toward the predetermined value, the secondary flux $\Phi_2$ or the exciting current $i_0$ is returned to the normal value, thereby reducing a variation in rotation speed $\omega_r$ at a low speed of said induction motor (9).

8. An apparatus according to any of claims 1 to 4, wherein the function stored in said memory is set such that: when a range of changes in slip speed $\omega_s$ is set in accordance with a value of a command torque T acting on said induction motor (9) and the value of the command torque T is less than a predetermined value, the range of changes in slip speed $\omega_s$ has a lower limit a slip speed $\omega_{s1}$ in a rated operation (i.e., a rated torque and a rated rotation speed) of said induction motor (9) and as an upper limit a slip speed $\omega_{s2}$ for generating a loss equal to that of said induction motor (9) in the rated operation with respect to the value of the command torque T; when the value of the command torque T exceeds the predetermined value, the range of changes in slip speed $\omega_s$ has the slip speed $\omega_{s1}$ as an upper limit and as a lower limit a slip speed $\omega_{s3}$ determined by circuit constants (i.e., a mutual conductance M, a secondary inductance $L_{22}$, a primary resistance $R_1$, and a secondary resistance $R_2$) of said induction motor (9), the slip speed $\omega_{s3}$ serving to minimizing the loss;

whereby when the commanded torque T is reduced, the slip speed $\omega_s$ is increased and when the commanded torque T is increased, the slip speed $\omega_s$ is reduced, so that when the commanded torque T is small, a variation in rotation speed $\omega_r$ of said induction motor (9) is reduced and that when the command torque T is large, the loss of said induction motor (9) is reduced.

9. An apparatus according to claim 8, wherein the function is set such that an increase/decrease in secondary flux $\Phi_2$ or exciting current $i_0$ is controlled so as to increase/decrease the slip speed $\omega_s$ by an increase/decrease in the commanded torque T, thereby setting the slip speed $\omega_s$ and a torque current $i_{1a}$ so as to maintain relations of vector control according to the command torque T as well as the secondary flux $\Phi_2$ or the exciting current $i_0$.

10. An apparatus according to any of claims 1 to 4, wherein the function is set such that: when a command torque T is less than a predetermined value $|T_E|$, if a rotation speed $|\omega_r|$ is reduced within a range smaller than a predetermined rotation speed $|\omega_r^-|$, a slip speed $|\omega_s|$ of said induction motor (9) causes to reduce a secondary flux $\Phi_2$ or an exciting current $i_0$ so as to prevent the slip speed $|\omega_s|$ from exceeding a maximum slip speed $|\omega_s^-|$ determined by the commanded torque T and an allowable loss L of said induction motor (9), and if the rotation speed $|\omega_r|$ exceeds the predetermined rotation speed $|\omega_r^-|$, the secondary flux $\Phi_2$ or the exciting current $i_0$ is set to be an expected value $\Phi_{2E}$ or $i_{0E}$; and when the commanded torque T exceeds the predetermined value $|T_E|$, the slip speed $|\omega_s|$ of said induction motor (9) is determined to increase the expected secondary flux $\Phi_{2E}$ or the expected exciting current $i_{0E}$ within a partial or entire range of rotation speeds

8

$|\omega_r|$ which do not exceed a minimum slip speed $|\omega_s^{-\prime}|$ for minimizing the loss L of said induction motor (9), whereby controlling the slip speed $\omega_s$ and the torque current $i_{1q}$ of said induction motor (9) by the commanded torque T, the secondary flux $\Phi_2$ or the exciting current $i_0$ so as to satisfy relations of vector control.

11. An apparatus according to claim 10, wherein the function is set so that, when the command torque T is smaller than the predetermined value $T_E$, the expected secondary flux $\Phi_{2E}$ or the expected exciting current $i_{0E}$ linearly decreases as a function of the rotation speed $\omega_r$ under a condition i.e., rotation speed $|\omega_r| \leqq$ the predetermined speed $|\omega_r^-|$.

12. An apparatus according to claim 10, wherein the function is set so that when the command torque T exceeds the predetermined value $T_E$, as the rotation speed $\omega_r$ is decreased, the expected secondary flux $\Phi_{2E}$ or the expected exciting current $i_{0E}$ linearly increases for a second predetermined rotation speed $|\omega_r^{-\prime}|$ larger than the predetermined speed $|\omega_r^-|$ under a condition, i.e., the rotation speed $|\omega_r| \leqq$ the second predetermined rotation speed $|\omega_r^{-\prime}|$.

## Patentansprüche

1. Vektorsteuerungsvorrichtung mit:
einer Einrichtung (1) zum Ausgeben eines Drehmomentbefehls (T),
einer Einrichtung zum Ausgeben eines Sekundärflußbefehls $\phi_2$,
einer Einrichtung zum Berechnen eines Strombefehlwerts für jede Phase eines Induktionsmotors auf der Basis des Drehmomentbefehls T und des Sekundärflußbefehls $\phi_2$, und
einer Einrichtung zum Liefern eines Stroms, der durch den Strombefehlswert repräsentiert wird, an den Induktionsmotor (9), **dadurch gekennzeichnet, daß**
die Sekundärflußbefehl-Ausgabeeinrichtung eine Speichereinrichtung (22) zum Speichern einer Funktion, die eine bestimmte Beziehung zwischen einer Drehgeschwindigkeit $\omega_r$, einem Drehmoment T und einem Sekundärfluß $\phi_2$ des Induktionsmotors (9) repräsentiert, und zum Ausgeben des Sekundärflusses $\phi_2$ entsprechend den Drehgeschwindigkeitsdaten und Drehmomentdaten, und eine Einrichtung (19; 21) aufweist zum Liefern mindestens der Daten entsprechend einem dem Drehmomentbefehl T und der momentanen Geschwindigkeit $\omega_r$ an die Speichereinrichtung (22), und
wobei die bestimmte Beziehung zwischen $\omega_r$, T und $\phi_2$ so bestimmt wird, daß, wenn T groß ist, der sekundäre magnetische Fluß $\phi_2$ in solcher Weise vergrößert wird, innerhalb eines Bereiches, in dem das Verhältnis der Motorverluste L zu T (T/L) einen Maximalwert erreichen kann, das eine Schlupfgeschwindigkeit $\omega_s$ klein ist, und wenn T klein ist und die Momentangeschwindigkeit kleiner als ein bestimmter Wert ist, der sekundäre magnetische Fluß $\phi_2$ in solcher Weise verringert wird, daß die Welligkeit der momentanen Geschwindigkeit $\omega_r$ verringert wird und die Schlupfgeschwindigkeit $\omega_s$ vergrößert wird, innerhalb eines erlaubten Bereiches der Verluste L.

2. Vorrichtung nach Anspruch 1, wobei die Einrichtung zum Liefern mindestens der Daten entsprechend einem dem Drehmomentbefehl T und der momentanen Geschwindigkeit $\omega_r$ an die Speichereinrichtung (22) aufweist:
eine Einrichtung (11) zum Detektieren der Drehgeschwindigkeit des Induktionsmotors (9),
eine erste Einrichtung (21) zum Liefern der digitalisierten Drehgeschwindigkeitsdaten an die Speichereinrichtung (22), und
eine zweite Einrichtung (19) zum Liefern der digitalisierten Drehmomentdaten an die Speichereinrichtung (22).

3. Vorrichtung nach Anspruch 1, wobei die Einrichtung zum Liefern der Drehmomentdaten an die Speichereinrichtung (22) eine Einrichtung (19) aufweist zum Liefern der digitalisierten Drehmomentdaten an die Speichereinrichtung (22).

4. Vorrichtung nach Anspruch 1, wobei die Einrichtung zum Liefern mindestens der Daten entsprechend einem dem Drehmomentbefehl T und der momentanen Geschwindigkeit $\omega_r$ an die Speichereinrichtung (22) aufweist:
eine Einrichtung (11) zum Detektieren der Drehgeschwindigkeit des Induktionsmotors (9),
eine Einrichtung (21) zum Liefern der digitalisierten Drehgeschwindigkeitsdaten an die Speichereinrichtung (22), und
eine DIP-Schaltereinrichtung (24) zum Liefern des Drehmomentbefehls an die Speichereinrichtung (22).

5. Vorrichtung nach einem der Ansprüche 1 bis 4, wobei die Funktion derart gewählt ist, daß ein Wert des Sekundärflusses $\phi_2$ oder eines Erregerstroms $i_0$ des Induktionsmotors (9) bestimmt wird durch den Drehmomentbefehl T und die Drehgeschwindigkeit $\omega_r$, und daß der Erregerstrom $i_0$, der Drehmomentstrom $i_{1q}$ und die Schlupfgeschwindigkeit $\omega_s$ des Induktionsmotors (9) so bestimmt werden, daß die Vektorsteuerungs-Beziehungen auf der Basis des Sekundärflusses $\phi_2$und des Erregerstromes $i_0$ beibehalten werden.

6. Vorrichtung nach Anspruch 5, wobei die Funktion so ausgewählt ist, daß, wenn der Drehmomentbefehl T einen bestimmten Wert übersteigt, die Schlupfgeschwindigkeit $\omega_s$ in Abhängigkeit von dem befohlenen Drehmoment T geändert wird, wobei die Schlupfgeschwindigkeit $\omega_s$ bestimmt wird durch Werte einer gemeinsamen Induktivität M, einer Sekundärinduktivität $L_{22}$, eines Primärwiderstands $R_1$ und eines Sekundärwiderstands $R_2$, die alle Schaltungskonstanten des Induktionsmotors (9) sind, und wobei die Schlupfgeschwindigkeit $\omega_s$ bewirkt, daß der Sekundärfluß $\phi_2$ oder der Erregerstrom $i_0$ auf einen bestimmten Wert erhöht werden, so daß der Verlust (Summe aus primären und sekundären Verlusten) des Induktionsmotors (9) in Bezug auf das befohlene Drehmoment T klein ist, wodurch die Verluste bei einem konstanten Drehmoment stark verringert werden.

7. Vorrichtung nach einem der Ansprüche 1 bis 4, wobei die Funktion so ausgewählt ist, daß, wenn der Dremomentbefehl T kleiner als ein bestimmter Wert ist, wenn ein Absolutwert $|\omega_r|$ der Drehgeschwindigkeit des Induktionsmotors (9) kleiner als ein bestimmter Wert ist, eine Schlupfgeschwindigkeit $\omega_s$ in Abhängigkeit von einem Wert der Drehgeschwindigkeit $\omega_r$ verändert wird, wenn der Absolutwert $|\omega_r|$ der Drehgeschwindigkeit verringert wird, der Sekundärfluß $\phi_2$ oder der Erregerstrom $i_0$ von einem Normalwert auf einen bestimmten Wert verringert wird, und wenn der Absolutwert $|\omega_r|$ der Drehgeschwindigkeit vergrößert wird auf einen bestimmten Wert, der Sekundärfluß $\phi_2$ oder der Erregerstrom $i_0$ zum Normalwert zurückkehrt, wodurch Veränderungen der Drehgeschwindigkeit $\omega_r$ bei einer niedrigen Geschwindigkeit des Induktionsmotors (9) verringert werden.

8. Vorrichtung nach einem der Ansprüche 1 bis 4, wobei die in dem Speicher gespeicherte Funktion so ausgewählt ist, daß, wenn ein Bereich von Änderungen der Schlupfgeschwindigkeit $\omega_s$ entsprechend einem Wert eines Drehbefehls T, der in dem Induktionsmotor (9) wirkt, ausgewählt ist, und der Wert des Drehbefehls T kleiner als ein bestimmter Wert ist, der Bereich von Änderungen der Schlupfgeschwindigkeit $\omega_s$ eine untere Grenze der Schlupfgeschwindigkeit $\omega_{s1}$ in einem Nennbetrieb (d.h. ein Nenndrehmoment und eine Nenndrehgeschwindigkeit) des Induktionsmotors (9) hat und als eine obere Grenze der Schlupfgeschwindigkeit $\omega_{s2}$ zum Erzeugen eines Verlustes, der gleich dem des Induktionsmotors (9) in dem Nennbetrieb bezogen auf den Wert des Drehbefehls T ist, wenn der Wert des Drehbefehls T den bestimmten Wert übersteigt, der Bereich der Änderungen der Schlupfgeschwindigkeit $\omega_s$ die Schlupfgeschwindigkeit $\omega_{s1}$ als obere Grenze und als untere Grenze eine Schlupfgeschwindigkeit $\omega_{s3}$ aufweist, die bestimmt werden durch Schaltungskonstanten, d.h. gemeinsamer Leitwert M, eine Sekundärinduktivität $L_{22}$, ein Primärwiderstand $R_1$ und ein Sekundärwiderstand $R_2$ des Induktionsmotors (9), wobei die Schlupfgeschwindigkeit $\omega_{s3}$ zum Verringern der Verluste dient,

wodurch, wenn das befohlene Drehmoment T verringert wird, die Schlupfgeschwindigkeit $\omega_s$ vergrößert wird und wenn das befohlene Drehmoment T vergrößert wird, die Schlupfgeschwindigkeit $\omega_s$ verringert wird, so daß, wenn das befohlene Drehmoment T klein ist, Veränderungen der Drehgeschwindigkeit $\omega_r$ des Induktionsmotors (9) verringert werden und daß, wenn das befohlene Drehmoment T groß ist, Verluste des Induktionsmotors (9) verringert sind.

9. Vorrichtung nach Anspruch 8, wobei die Funktion derart gewählt ist, daß eine Vergrößerung/Verringerung des Sekundärflusses $\phi_2$ oder des Erregerstromes $i_0$ kontrolliert wird, so daß durch eine Vergrößerung/Verringerung des befohlenen Drehmoments T die Schlupfgeschwindigkeit $\omega_s$ so gesteuert wird, daß diese vergrößert/verringert wird, wodurch die Schlupfgeschwindigkeit $\omega_s$ und der Drehmomentstrom $i_{1q}$ so eingestellt werden, daß die Beziehungen der Vektorsteuerung entsprechend dem Drehmomentbefehl T wie auch dem Sekundärfluß $\phi_2$ oder dem Erregerstrom $i_0$ aufrechterhalten werden.

10. Vorrichtung nach einem der Ansprüche 1 bis 4, wobei die Funktion so ausgewählt ist, daß, wenn ein Drehmomentbefehl T kleiner als ein bestimmter Wert $|T_E|$ ist, wenn eine Drehgeschwindigkeit $|\omega_r|$ in einem Bereich verringert wird, der kleiner als eine bestimmte Drehgeschwindigkeit $|\omega_r^-|$, eine Schlupfgeschwindigkeit $|\omega_s|$ des Induktionsmotors (9) die Verringerung eines Sekundärflusses $\phi_2$ oder eines Erregerstroms $i_0$ bewirkt, so daß vermieden wird, daß die Schlupfgeschwindigkeit $|\omega_s|$ eine maximale Schlupfgeschwindigkeit $|\omega_s^-|$ übersteigt, die bestimmt werden durch das befohlene Drehmoment T und eines zulässigen Verlustes L des Induktionsmotors (9), und wenn die Drehgeschwindigkeit $|\omega_r|$ die bestimmte Drehgeschwindigkeit $|\omega_r^-|$ übersteigt, der Sekundärfluß $\phi_2$ oder der Erregerstrom $i_0$ auf einen erwarteten Wert $\phi_{2E}$ oder $i_{0E}$ eingestellt werden, und wenn das befohlene Drehmoment T den bestimmten Wert $|T_E|$ übersteigt, die Schlupfgeschwindigkeit $|\omega_s|$ des Induktionsmotors (9) bestimmt wird, so daß der erwartete Sekundärfluß $\phi_{2E}$ oder der erwartete Erregerstrom $i_{0E}$ innerhalb eines Teil- oder Gesamtbereiches der Drehgeschwindigkeiten $|\omega_r|$ vergrößert werden, die nicht eine minimale Schlupfgeschwindigkeit $|\omega_s^-|$ übersteigen zum Verringern der Verluste L des Induktionsmotors (9), wodurch die Schlupfgeschwindigkeit $\omega_s$ und der Drehmomentstrom $i_{1q}$ des Induktionsmotors (9) durch das befohlene Drehmoment T, den Sekundärfluß $\phi_2$ oder den Erregerstrom $i_0$ so gesteuert werden, daß Beziehungen der Vektorsteuerung erfüllt werden.

11. Vorrichtung nach Anspruch 10, wobei die Funktion so gewählt ist, daß, wenn der Drehmomentbefehl T kleiner ist als der bestimmte Wert $T_E$, der erwartete Sekundärfluß $\phi_{2E}$ oder der erwartete Erregerstrom $i_{0E}$

linear abnimmt als eine Funktion der Drehgeschwindigkeit $\omega_r$ unter einer Bedingung, d.h. Drehgeschwindigkeit $|\omega_r| \leq$ die bestimmte Geschwindigkeit $|\omega_r^-|$.

12. Vorrichtung nach Anspruch 10, wobei die Funktion so gewählt ist, daß wenn der Drehmomentbefehl T den bestimmten Wert $T_E$ übersteigt, wenn die Drehgeschwindigkeit $\omega_r$ verringert wird, der erwartete Sekundärfluß $\phi_{2E}$ oder der erwartete Erregerstrom $i_{0E}$ linear ansteigt auf eine zweite bestimmte Drehgeschwindigkeit $|\omega_r^-|$, der größer ist als die bestimmte Geschwindigkeit $|\omega_r^-|$ unter einer Bedingung, d.h. die Drehgeschwindigkeit $|\omega_r| \leq$ die zweite bestimmte Drehgeschwindigkeit $|\omega_r^-|$.

## Revendications

1. Dispositif de régulation vectorielle comprenant:
   un moyen (1) pour produire une commande de couple T;
   un moyen pour produire une commande de flux secondaire $\phi_2$;
   un moyen pour calculer une valeur de commande de courant pour chaque phase d'un moteur à induction à partir de la commande de couple T et de la commande de flux secondaire $\phi_2$; et
   un moyen pour fournir un courant représenté par ladite valeur de commande de courant audit moteur à induction (9); caractérisé en ce que:
   ledit moyen générateur de commande de flux secondaire comprend un moyen à mémoire (22) pour stocker une fonction représentant une relation prédéterminée entre une vitesse de rotation $\omega_r$, un couple T et un flux secondaire $\phi_2$ dudit moteur à induction (9) et pour produire le flux secondaire $\phi_2$ correspondant à la donnée de vitesse de rotation et à la donnée de couple, et un moyen (19;21) pour appliquer la donnée qui correspond à au moins l'une de la commande de couple T et de la vitesse effective $\omega_r$, audit moyen à mémoire (22); et
   en ce que ladite relation prédéterminée entre $\omega_r$, T et $\phi_2$ est déterminée de telle sorte que lorsque T est grand, le flux magnétique secondaire $\phi_2$ augmente dans une plage dans laquelle le rapport entre les pertes du moteur L et T (T/L) peut atteindre une valeur maximale, de façon à minimiser une vitesse de glissement $\omega_s$, et que lorsque T est faible et la vitesse effective inférieure à une valeur prédéterminée, le flux magnétique secondaire $\phi_2$ soit réduit de façon à diminuer l'ondulation de ladite vitesse effective $\omega_r$, et à augmenter ladite vitesse de glissement à l'intérieur d'une plage admissible de pertes L.

2. Dispositif selon la revendication 1, dont ledit moyen d'application de ladite donnée correspondant à au moins l'une de la commande de couple T et de la vitesse effective $\omega_r$ audit moyen à mémoire (22) comprend:
   un moyen (11) pour détecter la vitesse de rotation dudit moteur à induction (9);
   un premier moyen (21) pour appliquer la donnée de vitesse de rotation numérisée audit moyen à mémoire (22); et
   un second moyen (19) pour appliquer la donnée de couple numérisée audit moyen à mémoire (22).

3. Dispositif selon la revendication 1, dont ledit moyen pour appliquer ladite donnée de couple audit moyen à mémoire (22) comprend un moyen (19) pour appliquer la donnée de couple numérisé audit moyen à mémoire (22).

4. Dispositif selon la revendication 1, dont ledit moyen pour appliquer ladite donnée correspondant à au moins l'une de la commande de couple T et de la vitesse effective $\omega_r$ audit moyen à mémoire (22) comprend:
   un moyen (11) pour détecter la vitesse de rotation dudit moteur à induction (9) ;
   un moyen (21) pour fournir la donnée de vitesse de rotation numérisée audit moyen à mémoire (22); et
   un moyen à commutateur à boîtier Dual In Line (24) pour appliquer la commande de couple audit moyen à mémoire (22).

5. Dispositif selon l'une quelconque des revendications 1 à 4, dont la fonction est fixée de telle manière qu'une valeur du flux secondaire $\phi_2$ ou d'un courant d'excitation $i_0$ dudit moteur à induction (9) soit déterminé par le couple de commande T et par la vitesse de rotation $\omega_r$ et que le courant d'excitation $i_0$, le courant de couple $i_{iq}$ et la vitesse de glissement $\omega_s$ dudit moteur à induction (9) soient déterminés de façon à ce que les relations de la régulation vectorielle basées sur le flux secondaire $\phi_2$ et le courant d'excitation $i_0$ soient conservées.

6. Dispositif selon la revendication 5, dont la fonction est fixée de telle manière que lorsque le couple de commande T dépasse une valeur prédéterminée, la vitesse de glissement $\omega_s$ soit modifiée en fonction du couple de commande T; que la vitesse de glissement $\omega_s$ soit déterminée par les valeurs de l'inductance mutuelle M, de l'inductance secondaire $L_{22}$, de la résistance primaire $R_1$ et de la résistance secondaire $R_2$, celles-ci étant toutes des constantes du circuit dudit moteur à induction (9); et que la vitesse de glissement $\omega_s$ provoque l'augmentation du flux secondaire $\phi_2$ ou du courant d'excitation $i_0$ jusqu'à une valeur prédéterminée afin de minimiser les pertes (somme des pertes primaires et secondaires) dudit moteur à induction (9) par rapport au couple de

11

commande T, afin de réduire sensiblement les pertes pour un couple constant.

7. Dispositif selon l'une quelconque des revendications 1 à 4, dont la fonction est fixée de telle manière que lorsque le couple de commande T est inférieur à une valeur prédéterminée, si la valeur absolue $|\omega_r|$ de la vitesse de rotation dudit moteur à induction (9) est inférieure à une valeur prédéterminée, la vitesse de glissement $\omega_s$ soit modifiée en fonction d'une valeur de la vitesse de rotation $\omega_r$; si la valeur absolue $|\omega_r|$ de la vitesse de rotation diminue, le flux secondaire $\phi_2$ ou le courant d'excitation $i_0$ augmente d'une valeur normale jusqu'à une valeur prédéterminée; et si la valeur absolue $|\omega_r|$ de la vitesse de rotation augmente vers la valeur prédéterminée, le flux secondaire $\phi_2$ ou le courant d'excitation $i_0$ soit ramené à la valeur normale, afin de réduire les variations de la vitesse de rotation $\omega_r$ pour une faible vitesse dudit moteur à induction (9).

8. Dispositif selon l'une quelconque des revendications 1 à 4, dont la fonction stockée dans ladite mémoire est fixée de telle manière que lorsque la plage de variation de la vitesse de glissement $\omega_s$ est fixée en fonction d'une valeur du couple de commande T agissant sur ledit moteur à induction 9, que lorsque la valeur du couple de commande T est inférieure à une valeur prédéterminée, la plage de variation de la vitesse de glissement $\omega_s$ ait une limite inférieure de vitesse de glissement $\omega_{s1}$ lors d'un fonctionnement nominal (c'est-à-dire pour un couple nominal et une vitesse de rotation nominale) dudit moteur à induction (9), et ait une limite supérieure de vitesse de glissement $\omega_{s2}$ afin de produire une perte égale à celle dudit moteur à induction (9) en fonctionnement nominal par rapport à la valeur du couple de commande T, que lorsque la valeur du couple de commande T dépasse la valeur prédéterminée, la plage des variations de vitesse de glissement $\omega_s$ ait une limite supérieure de vitesse de glissement $\omega_{s1}$ et une limite inférieure de vitesse de glissement $\omega_{s3}$ déterminées par les constantes du circuit (c'est-à-dire la conductance mutuelle M, l'inductance secondaire $L_{22}$, la résistance primaire $R_1$, et la résistance secondaire $R_2$) dudit moteur à induction (9), la vitesse de glissement $\omega_{s3}$ servant à minimiser les pertes;

de telle sorte que lorsque le couple de commande T diminue, la vitesse de glissement $\omega_s$ augmente, et que lorsque le couple de commande T augmente, la vitesse de glissement $\omega_s$ diminue, que lorsque le couple de commande T est faible, la variation de la vitesse de rotation $\omega_r$ dudit moteur à induction (9) soit réduite et que lorsque le couple de commande T est grand, les pertes dudit moteur à induction (9) soient réduites.

9. Dispositif selon la revendication 8, dont la fonction est fixée de façon à ce que l'augmentation/diminution du flux secondaire $\phi_2$ ou du courant d'excitation $i_0$ soit régulée de manière à augmenter/diminuer la vitesse de glissement $\omega_s$ par augmentation/diminution du couple de commande T, ce qui permet de fixer la vitesse de glissement $\omega_s$ et le courant de couple $i_{iq}$ afin que les relations de la régulation vectorielle en fonction du couple de commande T et du flux secondaire $\phi_2$ ou du courant d'excitation $i_0$ soient conservées.

10. Dispositif selon l'une quelconque des revendications 1 à 4, dont la fonction est fixée de telle manière que lorsqu'un couple commandé T est inférieur à une vlauer prédéterminée $|T_E|$, la la vitesse de rotation $|\omega_r|$ soit ramenée à l'intérieur d'une plage inférieure à une vitesse de rotation prédéterminée $|\omega_r^-|$, la vitesse de glissement $|\omega_s|$ dudit moteur à induction (9) provoque une réduction du flux secondaire $\phi_2$ ou du courant d'excitation $i_0$ de façon à empêcher la vitesse de glissement $|\omega_s|$ de dépasser une vitesse de glissement maximal $|\omega_s^-|$, déterminée par le couple de commande T et une perte admissible L dudit moteur à induction (9) et, que si la vitesse de rotation $|\omega_r|$ dépasse la vitesse de rotation prédéterminée $|\omega_r^-|$, le flux secondaire $\phi_2$ ou le courant d'excitation $i_0$ soit fixé à une valeur attendue $\phi_{2E}$ ou $i_{0E}$ ; et que lorsque le couple de commande T dépasse la valeur prédéterminée $|T_E|$, la vitesse de glissement $|\omega_s|$ dudit moteur à induction (9) soit déterminée de façon à accroître le flux secondaire attendu $\phi_{2E}$ ou le courant d'excitation attendu $i_{0E}$ à l'intérieur d'une plage partielle ou totale de vitesses de rotation $|\omega_r|$ qui ne dépasse pas une vitesse de glissement minimale $|\omega_s^{-'}|$ afin de minimiser les pertes L dudit moteur à induction (9), ce qui permet de réguler la vitesse de glissement $\omega_s$ et le courant de couple $i_{iq}$ dudit moteur à induction (9) à partir du couple de commande T, du flux secondaire $\phi_2$ ou du courant d'excitation $i_0$ afin que les relations de la régulation vectorielle soient satisfaites.

11. Dispositif selon la revendication 10, dont la fonction est fixée de façon à ce que lorsque le couple de commande T est inférieur à une valeur prédéterminée TE, le flux secondaire $\phi_{2E}$ ou le courant d'excitation attendu $i_{0E}$ diminue linéairement en fonction de la vitesse de rotation $\omega_r$ sous réserve que la vitesse de rotation $|\omega_r|$ soit inférieure ou égale à la vitesse prédéterminée $|\omega_r^-|$.

12. Dispositif selon la revendication 10, dont la fonction est fixée de façon à ce que lorsque le couple de commande T dépasse la valeur prédéterminée $T_E$ au fur et à mesure que la vitesse de rotation $\omega_r$ diminue, le flux secondaire attendu $\phi_{2E}$ ou le courant d'excitation attendu $i_{0E}$ augmente linéairement pour une seconde vitesse de rotation prédéterminée $|\omega_r^{-'}|$ supérieure à la vitesse prédéterminée $|\omega_r^-|$ sous réserve que la vitesse de rotation $|\omega_r|$ soit inférieure ou égale à la seconde vitesse de rotation prédéterminée $|\omega_r^{-'}|$.

F I G. 1
(PRIOR ART)

# F I G. 2
(PRIOR ART)

# F I G. 3
(PRIOR ART)

14

F I G.4

F I G.6

**F I G.5**

FIG.7

FIG.8

FIG.9

F I G. 10

FIG.11